# DEMANDE DE BREVET EUROPEEN

(11) **EP 2 131 297 A1**
(43) Date de publication de la demande: **09.12.2009**
(21) Numéro de dépôt: 09290391.3
(22) Date de dépôt: 27.05.2009
(51) Int. Cl.: G06F 17/30

(54) **Procédé et dispositif de numérisation**

(30) Priorité: 02.06.2008 FR 0802998
(71) Demandeur: SAGEM COMMUNICATIONS SAS, 92848 Rueil Malmaison Cedex (FR)
(72) Inventeur: Manac'h Stéphane, 75015 Paris (FR)
(74) Mandataire: Lavialle, Bruno François Stéphane

(57) **Abrégé**

L'invention a trait à un procédé et à un dispositif de numérisation associé. Selon l'invention le procédé comprend les étapes suivantes : une étape de numérisation du document numérisé dans un fichier sous format image, une étape de reconnaissance de texte, une étape d'archivage pour générer et stocker au moins un fichier sous format texte correspondant au document numérisé et en outre une étape de conservation de manière conditionnelle du fichier sous format image du document numérisé et une étape de génération d'un lien entre ledit fichier sous format image et le fichier sous format texte d'un même document numérisé.

## Description

La présente invention se rapporte au domaine des dispositifs de numérisation et plus particulièrement concerne un procédé et dispositif associé de numérisation intégrant un logiciel de reconnaissance de texte ou logiciel OCR.

La présente invention trouvera son application principale dans la réalisation d'un procédé de numérisation pour la constitution d'archives. Toutefois bien que particulièrement prévu pour une telle application le procédé de numérisation pourra également être utilisé pour toutes les applications classiques de numérisation, telle que, par exemple, la transmission de document dans un réseau.

### ARRIERE PLAN DE L'INVENTION

On connaît des procédés de numérisation comportant une étape de numérisation et de création automatique d'un fichier sous format texte. Par rapport aux procédés classiques dans lesquels la numérisation et la reconnaissance de texte se font en deux étapes, ces procédés permettent à l'utilisateur de gagner en temps et en simplicité. En effet ces procédés ne nécessitent pas de la part de l'utilisateur d'action autre que celle du lancement de la numérisation pour débuter également la reconnaissance de texte.

Le stockage de documents numérisés sous la forme de fichiers en format texte présente différents avantages, notamment : d'une part, ces fichiers sous format texte occupent un volume de mémoire moins important que les fichiers sous format image correspondant et, d'autre part il est possible de faire des analyses et/ou des recherches de fichiers sous format texte en fonction de leurs contenus et par exemple des recherches de mots clés ou encore de nombre de mots dans le texte.

Un inconvénient de ce type de numérisation est que les fichiers sous format texte ne comportent pas toutes les informations du document numérisé et notamment les images, repères ou encore signatures. La reconnaissance de texte est en outre perfectible compte tenu de possibles erreurs de transcription.

En fonction de la destination de l'archivage on comprend que la numérisation d'un fichier texte peut être insuffisante et notamment lorsque l'utilisateur a besoin de retrouver une copie originale devant faire foi. On comprend également que la numérisation des documents en fichier image n'est pas non plus satisfaisante en ce sens que ces fichiers volumineux ne sont pas aisément manipulables et que la recherche et l'analyse de ces fichiers sur la base de leur contenu n'est pas fiable.

### OBJET DE L'INVENTION

La présente invention a pour but d'obvier aux inconvénients précités et de proposer un procédé de numérisation permettant à la fois de réaliser un archivage de documents pouvant être aisément indexés et retrouvés par des moteurs de recherche, de disposer de documents numérisés comportant l'ensemble des informations du document original et de limiter, au moins localement, le volume de données des archives.

### RESUME DE L'INVENTION

A cet effet le procédé de numérisation selon l'invention comprend une étape de numérisation d'un document dans un fichier sous format image, une étape de reconnaissance de texte, une étape d'archivage pour générer et stocker au moins un fichier sous format texte correspondant au document numérisé. En outre le procédé comprend une étape de conservation de manière conditionnelle du fichier sous format image et de génération d'un lien entre ledit fichier sous format image et le fichier sous format texte d'un même document numérisé.

Ce procédé de numérisation permet ainsi de ne conserver sous format image que les documents répondant à certains critères limitant par la même le volume des archives. Par ailleurs la numérisation de l'ensemble des documents sous format texte permet une utilisation souple et performante des archives. Le lien entre le fichier sous format texte et celui sous format image lorsque ce dernier est conservé permet également à l'utilisateur de visualiser rapidement le fichier sous format image.

L'invention vise également un dispositif de numérisation permettant la mise en oeuvre des étapes précitées du procédé. Le dispositif de numérisation comporte des moyens de numérisation, des moyens de reconnaissance de texte, des moyens d'archivage pour générer et stocker au moins un fichier sous format texte correspondant au document numérisé et des moyens de commande autorisant de manière conditionnelle la conservation d'un fichier sous format image du document numérisé et générant un lien entre ledit fichier sous format image et le fichier sous format texte d'un même document numérisé.

De préférence l'étape de commande est pilotée à distance du dispositif de numérisation, cette disposition permet d'établir des règles cohérentes et/ou homogènes dans un réseau comportant plusieurs dispositifs de numérisation conformes à l'invention.

De préférence, l'ensemble des fichiers texte et les liens entre fichiers texte et fichiers image sont stockés en interne, à savoir dans le dispositif de numérisation,les fichiers image étant stockés sur une mémoire externe. Cette caractéristique permet notamment de créer une base de données de fichiers sous format image sur une mémoire centralisée commune à plusieurs dispositifs de numérisation.

Avantageusement, le dispositif de numérisation comprend des moyens d'indexation des fichiers texte de manière à faciliter la recherche manuelle ou automatique des fichiers texte.

### BREVE DESCRIPTION DES DESSINS

Bien entendu d'autres caractéristiques de l'invention apparaîtront clairement à la lecture de la description d'un mode de réalisation et de différentes variantes fournis à titre d'exemples non limitatifs. IL sera fait référence aux figures annexées parmi lesquelles :
- la figure 1 représente une vue schématique d'un exemple de réalisation du dispositif de numérisation conforme à l'invention,
- la figure 2 représente un organigramme illustrant les étapes du procédé de numérisation,
- les figures 3 et 4 représentent chacune un organigramme illustrant les étapes du procédé de numérisation selon deux variantes.

### DESCRIPTION DETAILLEE DE L'INVENTION

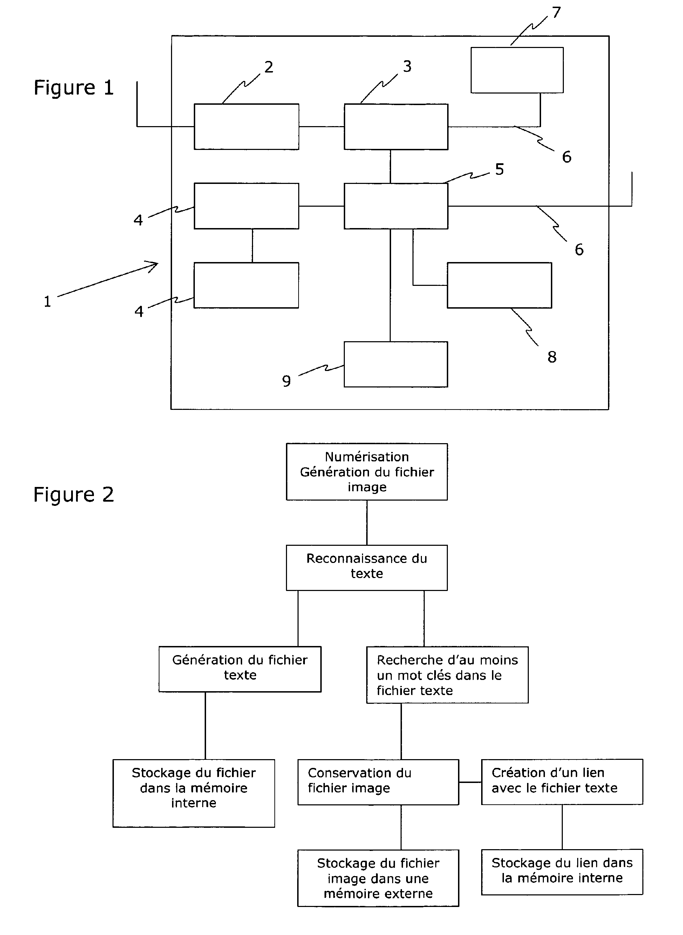

La figure 2 illustre un premier exemple de réalisation du procédé conforme à l'invention. La première étape consiste à numériser le ou les documents à partir d'un dispositif de numérisation. Pour ce faire et de manière classique l'utilisateur dispose les documents un à un ou en pile dans un chargeur.

Cette étape de numérisation du document en format image est suivie automatiquement d'une étape de reconnaissance de texte permettant la création d'un ou plusieurs fichiers sous format texte.

Selon une première option pour chaque document sera généré un fichier sous format texte toutefois selon une seconde option on pourra également fusionner l'ensemble des documents numérisés, lors d'une ou plusieurs opérations de numérisation, sous la forme d'un seul fichier sous format texte.

Le ou les fichiers sous format texte générés sont ensuite stockés dans une mémoire interne au dispositif de numérisation ou encore sur un périphérique ou sur tout autre moyen de mémorisation connu de l'homme du métier après transmission audit périphérique des fichiers sous format texte.

Une fois le fichier sous format texte généré se déroule l'étape de conservation permettant de manière conditionnelle la conservation d'un fichier sous format image. Différentes possibilités de détermination des conditions de conservation du fichier sous format image sont envisageables.

De manière préférentielle et selon le mode de réalisation illustré à la figure 2 la condition sera remplie si le fichier sous format texte généré comprend au moins un mot-clé d'une base de donnée.

A titre d'exemple, la base de données comprend un ensemble de mots-clés répartis dans des champs par thème ou niveau d'importance. La présence dans le fichier sous format texte d'un ou plusieurs mots clés dans un ou plusieurs champs lève la conditionnalité de la conservation du fichier sous format image.

Plus simplement, dans d'autres applications, on pourra également envisager une base de donnée avec un mot clé unique dont la présence dans le fichier sous format texte lève également la conditionnalité ou encore toute solution intermédiaire en fonction des exigences de l'utilisateur.

A ce sujet la base de donnée servant à la levée de la conditionnalité est avantageusement modifiable avec ou sans accès de sécurité.

En l'absence du ou des mots-clés nécessaires le fichier sous format image ne sera pas généré.

Dans l'hypothèse où le fichier sous format image est conservé un lien est créé entre le fichier sous format image et le fichier sous format texte correspondant. Il est important de noter qu'à contrario si aucun fichier sous format image n'est conservé une mention de cette absence pourra être éventuellement liée au fichier sous format texte.

Différents types de lien entre le fichier sous format image et le fichier sous format texte peuvent être envisagés, le lien devant avoir au moins pour fonction de retrouver le fichier sous format image de manière automatique ou manuelle à partir du fichier sous format texte. A ce sujet il est important de noter que le stockage des fichiers sous formats texte et image sera réalisé de manière avantageuse dans des mémoires indépendantes.

De manière à augmenter le niveau de sécurité de l'archivage on prévoit avantageusement une étape de sauvegarde des informations contenues dans les différentes mémoires, cette sauvegarde pouvant être automatisée et concerner les fichiers sous format image et/ou texte.

L'ensemble des étapes décrites précédemment permet l'établissement des archives, le procédé de numérisation conforme à l'invention comporte avantageusement des étapes supplémentaires permettant la gestion des archives.

A cet effet le procédé comprend une étape d'indexation des fichiers sous format texte non représentée dans les figures annexées. L'indexation s'effectue à partir d'un moteur de recherche, cette indexation permettant à un utilisateur d'effectuer des recherches.

A ce sujet on prévoit de préférence la possibilité d'indexer les fichiers en fonction de nombreux critères tels que non exclusivement leur contenu, leur origine ou leur date de création. L'étape de recherche sera réalisée par l'utilisateur à partir de requêtes correspondant aux critères d'indexation.

De manière à faciliter la lecture des fichiers révélés par l'étape de recherche on prévoit avantageusement une étape supplémentaire de mise en évidence des éléments indexés retrouvés dans le texte des fichiers sous format texte. La mise en évidence sera dans un mode préféré obtenue par une couleur différente, une surbrillance ou encore un graphisme différent pour les éléments indexés.

D'autres possibilités de mise en évidence sont envisageables et notamment un soulignage des éléments indexés.

En se reportant cette fois plus particulièrement à la figure 1, celle-ci illustre un dispositif de numérisation 1 permettant la mise en oeuvre du procédé décrit plus haut.

Le dispositif de numérisation 1 comprend principalement des moyens de numérisation 2. Ces moyens de numérisation 2 permettent de générer un fichier sous format image du document numérisé. Le dispositif comprend également des moyens de reconnaissance de texte 3, et des moyens d'archivage 4 pour générer et stocker au moins un fichier sous format texte correspondant au document numérisé. Le dispositif de numérisation 1 comprend en outre des moyens de conservation 5 autorisant de manière conditionnelle la conservation de fichier sous format image du document numérisé et générant un lien entre ledit fichier sous format image et le fichier sous format texte d'un même document numérisé.

De manière avantageuse on pourra prévoir qu'une ou plusieurs fonctionnalités du dispositif de numérisation 1 soient indépendantes des moyens de reconnaissance de texte 3.

A titre d'exemple on pourra prévoir dans une variante de réalisation que les moyens de reconnaissance 3 soient assurés par des moyens externes au dispositif de numérisation 1, les données de numérisation étant envoyées sous format compressé aux moyens externes qui retransmettent le fichier sous format texte au dispositif de numérisation 1.

Les moyens d'archivage 4 pourront également être partiellement ou totalement externalisés, dans un mode de réalisation préféré les fichiers sous format texte sont conservés sur un disque dur intégré au dispositif de numérisation 1 alors que les fichiers sous format image sont stockés à l'extérieur du dispositif de numérisation 1.

De manière avantageuse le dispositif de numérisation 1 comprend des moyens de sauvegarde des données, ces moyens de sauvegarde permettent de manière automatique la conservation des données sur un disque dur externe.

Comme représenté à la figure 1 le dispositif de numérisation 1 comprend également au moins une sortie 6 permettant la liaison avec un périphérique tel qu'une imprimante ou encore un afficheur 7 ou encore un ordinateur.

Selon un mode de réalisation préféré on prévoit que l'utilisation du moteur de recherche ainsi que l'accès aux bases de données soient réalisables à partir d'un ordinateur externe au dispositif de numérisation 1. A cette fin le dispositif 1 comprend un serveur embarqué 8 et une entrée 9, l'utilisateur accédant aux bases de données et à la recherche par la mise en oeuvre d'un navigateur internet.

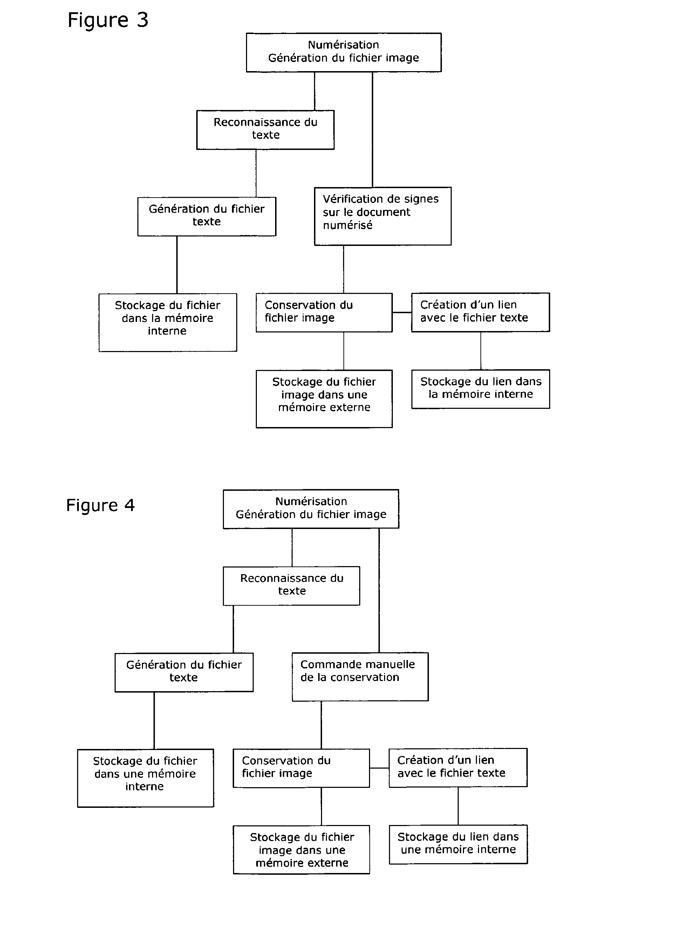

En se reportant cette fois aux figures 3 et 4, celles-ci illustrent sous forme d'algorithme deux variantes de réalisation du procédé. Dans ces deux modes de réalisation on retrouve les mêmes étapes que dans le mode de réalisation illustré à la figure 2 à l'exception de l'étape de conservation dont la mise en oeuvre est différente.

En effet dans le mode de réalisation de la figure 3, la conditionnalité de la conservation du fichier sous format image ne dépend pas de la présence d'au moins un mot clés dans le fichier sous format texte correspondant mais de la présence d'au moins un objet « image » sur le document numérisé.

L'analyse ne s'effectue donc pas sur le fichier sous format texte mais sur le document numérisé entre l'étape de numérisation et celle de reconnaissance du texte. L'objet « image » pourra consister notamment en un graphisme particulier, en une couleur donnée pour le document à numériser ou encore en un repère ou tout signe distinctif ajouté ou apparaissant sur le document à numériser.

Dans le mode de réalisation de la figure 4 la conditionnalité de la conservation d'un fichier sous format image est manuelle. A cette fin on prévoit avantageusement sur le dispositif de numérisation 1 une touche dédiée à la conservation d'un fichier sous format image ou encore selon une variante on pourra prévoir dans le menu du dispositif de numérisation 1 une option de conservation systématique de fichier sous format image.

Dans chacune des variantes décrites on a donc génération d'un fichier sous format texte et, sous condition, conservation d'un fichier sous format image permettant à l'utilisateur de bénéficier d'un archivage adapté à ses besoins en fonction de chaque document numérisé.

Bien entendu d'autres modes de réalisation, du procédé et du dispositif, à la portée de l'homme de l'art peuvent également être envisagés sans pour autant sortir du cadre de l'invention définit par les revendications ci-après.

## Revendications

1. Procédé de numérisation comprenant une étape de numérisation d'un document dans un fichier sous format image, une étape de reconnaissance de texte, une étape d'archivage pour générer et stocker au moins un fichier sous format texte correspondant au document numérisé, **caractérisé en ce qu'**il comprend en outre une étape de conservation de manière conditionnelle du fichier sous format image du document numérisé et une étape de génération d'un lien entre ledit fichier sous format image et le fichier sous format texte d'un même document numérisé.

2. Procédé de numérisation selon la revendication 1 dans lequel l'étape de conservation comprend une étape de recherche d'au moins un mot clés d'une base de données dans le fichier sous format texte.

3. Procédé de numérisation selon la revendication 1 dans lequel l'étape de conservation comprend une étape de recherche d'au moins un objet « image » d'une base de données dans le document numérisé

4. Procédé de numérisation selon la revendication 1 dans lequel l'étape de conservation est réalisée manuellement par l'utilisateur.

5. Procédé de numérisation selon l'une quelconque des revendications précédentes dans lequel l'étape d'archivage permet le stockage des fichiers image et texte ensemble ou sur plusieurs unités de mémoire disposée dans ou hors du dispositif de numérisation.

6. Procédé de numérisation selon la revendication 1 comportant une étape de sauvegarde des informations contenues dans la ou les unités de mémoire.

7. Procédé de numérisation selon la revendication 1 comportant une étape d'indexation des fichiers sous format texte.

8. Procédé de numérisation selon la revendication 7 comportant une étape de mise en évidence des éléments d'indexation dans le texte des fichiers sous format texte.

9. Procédé de numérisation selon l'une ou l'autre des revendications 7 et 8 comportant une étape de recherche des fichiers sous format texte indexés et des liens avec les fichiers sous format image.

10. Dispositif de numérisation pour la mise en oeuvre du procédé selon l'une quelconque des revendications précédentes comportant des moyens de numérisation (2), des moyens de reconnaissance de texte(3), des moyens d'archivage (4) pour générer et stocker au moins un fichier sous format texte correspondant au document numérisé **caractérisé en ce qu'**il comprend en outre des moyens de conservation (5) autorisant de manière conditionnelle la conservation d'un fichier sous format image du document numérisé et générant un lien entre ledit fichier sous format image et le fichier sous format texte d'un même document numérisé.
